# EUROPEAN PATENT APPLICATION

(11) **EP 4 535 704 A1**
(43) Date of publication of application: **09.04.2025**
(21) Application number: 23830181.6
(22) Date of filing: 26.06.2023
(51) Int. Cl.: H04L 5/00

(54) **INDICATION METHOD AND APPARATUS FOR REFERENCE SIGNAL**

(30) Priority: 30.06.2022 CN 202210769930
(71) Applicant: Huawei Technologies Co., Ltd., Shenzhen, Guangdong 518129 (CN)
(72) Inventor: WANG, Hanqing, Shenzhen, Guangdong 518129 (CN); WANG, Xiaohan, Shenzhen, Guangdong 518129 (CN); JIN, Huangping, Shenzhen, Guangdong 518129 (CN)
(74) Representative: Pfenning, Meinig & Partner mbB
(86) International application number: PCT/CN2023/102387
(87) International publication number: WO 2024/002004

(57) **Abstract**

Embodiments of this application provide a reference signal indication method and an apparatus, to enable coherent joint transmission in a non-ideal backhaul network. The method includes the following steps: A terminal device receives a plurality of pieces of first information from a plurality of network devices, where the first information indicates that at least one reference signal of the network device is for estimating a joint equivalent channel; the terminal device receives a plurality of pieces of second information from the plurality of network devices, where the second information indicates a port of the at least one reference signal; the terminal device receives a plurality of pieces of coherent joint transmission data from the plurality of network devices, where one piece of coherent joint transmission data includes at least one data stream and the at least one corresponding reference signal; and the terminal device determines at least one joint equivalent channel based on the at least one reference signal of the plurality of network devices.

## Description

This application claims priority to Chinese Patent Application No. 202210769930.8, filed with the China National Intellectual Property Administration on June 30, 2020 and entitled "REFERENCE SIGNAL INDICATION METHOD AND APPARATUS", which is incorporated herein by reference in its entirety.

### TECHNICAL FIELD

This application relates to the field of communication technologies, and in particular, to a reference signal indication method and an apparatus.

### BACKGROUND

A radio access network (radio access network, RAN) of an existing mobile communication system has a plurality of networking forms, and common networking forms include centralized RAN (centralized RAN, CRAN) networking and distributed networking (for example, an internet protocol RAN (Internet Protocol RAN, IPRAN)). In the CRAN networking, there is ideal backhaul (backhaul) between different RAN devices, that is, a transmission latency between different RAN devices is small, so that real-time information exchange can be performed between the RAN devices. However, in the IPRAN networking, backhaul between different RAN devices is non-ideal, that is, a transmission latency between different RAN devices is large, and consequently real-time information exchange cannot be performed between the RAN devices.

A typical scenario in mobile communication is that a terminal device moves to a co-coverage area of respectively cells of two RAN devices. In this case, the terminal device may simultaneously establish a wireless connection to the two RAN devices, to improve data transmission efficiency. With a real-time information exchange capability between the RAN devices, coherent joint transmission (coherent joint transmission, CJT) is an efficient data transmission mode applicable to communication in this scenario in the CRAN networking. However, in the distributed networking such as the IPRAN, a coherent joint transmission technology applied to the CRAN networking is not applicable due to non-ideal backhaul between the RAN devices. How to enable the coherent joint transmission to be applied in a non-ideal backhaul network is an urgent problem that needs to be resolved, to improve user experience in

### SUMMARY

This application provides a reference signal indication method and an apparatus, to enable coherent joint transmission in a non-ideal backhaul network.

The following describes this application from a plurality of aspects. It is easy to understand that implementations of the plurality of aspects may be mutually referenced.

According to a first aspect, this application provides a reference signal indication method, including: A terminal device receives a plurality of pieces of first information from a plurality of network devices, where one piece of first information is from one network device, and the first information indicates that at least one reference signal of the network device is for estimating a joint equivalent channel; the terminal device receives a plurality of pieces of second information from the plurality of network devices, where one piece of second information is from one network device, and the second information indicates a port of the at least one reference signal; the terminal device receives a plurality of pieces of coherent joint transmission data from the plurality of network devices, where one piece of coherent joint transmission data is from one network device, the coherent joint transmission data includes at least one data stream and the at least one reference signal corresponding to the at least one data stream, and one data stream corresponds to one reference signal; and the terminal device determines at least one joint equivalent channel based on the at least one reference signal of the plurality of network devices, where one joint equivalent channel is determined based on one reference signal of the plurality of network devices.

It can be learned that, according to the method provided in this embodiment of this application, coherent joint transmission in a non-ideal backhaul network is enabled, thereby effectively improving quality of service of a user in a multi-cell co-coverage area in a mobile network, and improving user experience.

In an optional implementation, the method further includes: The terminal device demodulates the at least one data stream based on the at least one joint equivalent channel, where one data stream is demodulated through one joint equivalent channel.

In an optional implementation, the reference signal is a demodulation reference signal DMRS.

In an optional implementation, the second information includes a port number or a port index of each of the at least one reference signal.

In an optional implementation, the first information is carried in radio resource control RRC signaling.

In an optional implementation, the second information is carried in downlink control information DCI signaling.

According to a second aspect, this application provides a reference signal indication method, including: A network device determines a resource for coherent joint transmission of a terminal device; the network device determines a port of at least one reference signal allocated for the coherent joint transmission; the network device sends first information to the terminal device, where the first information indicates that the at least one reference signal is for estimating a joint equivalent channel; the network device sends second information to the terminal device, where the second information indicates the port of the at least one reference signal; and the network device sends coherent joint transmission data to the terminal device, where the coherent joint transmission data includes at least one data stream and the at least one reference signal corresponding to the at least one data stream, and one data stream corresponds to one reference signal.

It can be learned that, according to the method provided in this embodiment of this application, coherent joint transmission in a non-ideal backhaul network is enabled, thereby effectively improving quality of service of a user in a multi-cell co-coverage area in a mobile network, and improving user experience.

In an optional implementation, the second information includes a port number or a port index of each of the at least one reference signal.

In an optional implementation, before the network device sends the second information to the terminal device, the method further includes: The network device determines, according to a first rule, an arrangement order of port numbers or port indexes of all of the at least one reference signal included in the second information.

In an optional implementation, the reference signal is a demodulation reference signal DMRS.

In an optional implementation, the first information is carried in radio resource control RRC signaling.

In an optional implementation, the second information is carried in downlink control information DCI signaling.

According to a third aspect, a terminal device is provided. The terminal device is configured to perform the method according to any one of the first aspect or the possible implementations of the first aspect. Specifically, the terminal device may include units configured to perform the method according to any one of the first aspect or the possible implementations of the first aspect.

According to a fourth aspect, a network device is provided. The network device is configured to perform the method according to any one of the second aspect or the possible implementations of the second aspect. Specifically, the network device may include units configured to perform the method according to any one of the second aspect or the possible implementations of the second aspect.

According to a fifth aspect, a terminal device is provided. The terminal device includes a processor, a transceiver, and a memory. The memory is configured to store computer-executable instructions. When the terminal device runs, the processor executes the computer-executable instructions stored in the memory, so that the terminal device performs the method according to any one of the first aspect or the possible implementations of the first aspect.

According to a sixth aspect, a network device is provided. The network device includes a processor, a transceiver, and a memory. The memory is configured to store computer-executable instructions. When the network device runs, the processor executes the computer-executable instructions stored in the memory, so that the network device performs the method according to any one of the second aspect or the possible implementations of the second aspect.

According to a seventh aspect, a communication apparatus is provided. The communication apparatus includes a processor. The processor is coupled to a memory, and may be configured to execute instructions in the memory, to implement the method according to any one of the first aspect or the possible implementations of the first aspect. Optionally, the communication apparatus further includes the memory. Optionally, the communication apparatus further includes a communication interface, and the processor is coupled to the communication interface.

In an implementation, the communication apparatus is a terminal device, and the communication interface may be a transceiver or an input/output interface.

In another implementation, the communication apparatus is a chip disposed in a terminal device. When the communication apparatus is the chip disposed in the terminal device, the communication interface may be an input/output interface.

Optionally, the transceiver may be a transceiver circuit. Optionally, the input/output interface may be an input/output circuit.

According to an eighth aspect, a communication apparatus is provided. The communication apparatus includes a processor. The processor is coupled to a memory, and may be configured to execute instructions in the memory, to implement the method according to any one of the second aspect or the possible implementations of the second aspect. Optionally, the communication apparatus further includes the memory. Optionally, the communication apparatus further includes a communication interface, and the processor is coupled to the communication interface.

In an implementation, the communication apparatus is a network device, and the communication interface may be a transceiver or an input/output interface.

In another implementation, the communication apparatus is a chip disposed in a network device. When the communication apparatus is the chip disposed in the network device, the communication interface may be an input/output interface.

Optionally, the transceiver may be a transceiver circuit. Optionally, the input/output interface may be an input/output circuit.

According to a ninth aspect, a processor is provided. The processor includes an input circuit, an output circuit, and a processing circuit. The processing circuit is configured to: receive a signal through the input circuit, and transmit the signal through the output circuit, so that the processor performs the method according to any one of the first aspect or the possible implementations of the first aspect.

According to a tenth aspect, a processor is provided. The processor includes an input circuit, an output circuit, and a processing circuit. The processing circuit is configured to receive a signal through the input circuit, and transmit the signal through the output circuit, so that the processor performs the method according to any one of the second aspect or the possible implementations of the second aspect.

According to an eleventh aspect, a processing apparatus is provided. The processing apparatus includes a processor and a memory. The processor is configured to read instructions stored in the memory, and may receive a signal through a receiver and transmit the signal through a transmitter, to perform the method according to any one of the first aspect or the possible implementations of the first aspect.

Optionally, there are one or more processors, and there are one or more memories.

Optionally, the memory may be integrated with the processor, or the memory is disposed separately from the processor.

According to a twelfth aspect, a processing apparatus is provided. The processing apparatus includes a processor and a memory. The processor is configured to read instructions stored in the memory, and may receive a signal through a receiver and transmit the signal through a transmitter, to perform the method according to any one of the second aspect or the possible implementations of the second aspect.

Optionally, there are one or more processors, and there are one or more memories.

Optionally, the memory may be integrated with the processor, or the memory is disposed separately from the processor.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

In a specific implementation process, the memory may be a non-transitory (non-transitory) memory, like a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of how much indication information the processor can receive. Specifically, data output by the processor may be output to the transmitter, and input data received by the processor may be from the receiver. The transmitter and the receiver may be collectively referred to as a transceiver.

The processing apparatus in the eleventh aspect or the twelfth aspect may be a chip. The processor may be implemented by hardware or software. When being implemented by hardware, the processor may be a logic circuit, an integrated circuit, or the like. When being implemented by software, the processor may be a general-purpose processor, and is implemented by reading software code stored in the memory, where the memory may be integrated in the processor, or may be located outside the processor and exists independently.

According to a thirteenth aspect, a computer-readable storage medium is provided. The computer-readable storage medium stores a program, and the program enables a computer to perform the method according to any one of the first aspect or the possible implementations of the first aspect, or any one of the second aspect or the possible implementations of the second aspect.

According to a fourteenth aspect, a computer program product is provided. The computer program product includes computer program code. When the computer program code is run by a communication unit, a processing unit, a transceiver, or a processor of a communication device, the communication device is enabled to perform the method according to any one of the first aspect or the possible implementations of the first aspect, or any one of the second aspect or the possible implementations of the second aspect.

These aspects or other aspects of the present invention are more concise and intelligible in descriptions in the following (plurality of) embodiments.

### BRIEF DESCRIPTION OF DRAWINGS

FIG. 1 is a diagram of a communication system according to an embodiment of this application;
FIG. 2 is a diagram of structures of a network device and a terminal device according to an embodiment of this application;
FIG. 3 is a diagram of a structure of a protocol stack of communication apparatuses according to an embodiment of this application;
FIG. 4 is a flowchart of a reference signal indication method according to an embodiment of this application;
FIG. 5 is a diagram of a type of reference signal port allocation according to an embodiment of this application;
FIG. 6 is a diagram of another type of reference signal port allocation according to an embodiment of this application;
FIG. 7 is a diagram of still another type of reference signal port allocation according to an embodiment of this application;
FIG. 8 is a diagram of a structure of a network device according to an embodiment of this application;
FIG. 9 is a diagram of a structure of a terminal device according to an embodiment of this application; and
FIG. 10 is a diagram of a structure of a chip according to an embodiment of this application.

### DESCRIPTION OF EMBODIMENTS

To better understand embodiments of this application, the following several items are described before embodiments of this application.

First, in this application, the term "indicate" may include a direct indication and an indirect indication. When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information, for example, the to-be-indicated information or an index of the to-be-indicated information, is directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to a conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may be sent as a whole, or may be divided into a plurality of pieces of sub-information and sent separately. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

Second, the terms "first", "second", and various numbers in the following embodiments are merely used for differentiation for ease of description, but are not intended to limit the scope of embodiments of this application. For example, different reference signals or indication information is distinguished.

Third, "predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, the "protocol" in embodiments of this application may refer to a standard protocol in the communication field, for example, including an LTE protocol, an NR protocol, and a related protocol applied to a future communication system. This is not limited in this application.

Fifth, "at least one" refers to one or more, and "a plurality of" refers to two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Specifically, the term "example", "for example", or the like is used to present a related concept in a specific manner.

The technical solutions provided in this application may be applied to various communication systems. The technical solutions provided in this application may be applied to a fifth generation (fifth generation, 5G) mobile communication system, a future evolved system, a multi-communication converged system, or the like; or may be applied to another conventional communication system like a wideband code division multiple access (wideband code division multiple access, WCDMA) system or a long term evolution (Long Term Evolution, LTE) system. Application scenarios of the technical solutions provided in this application may include a plurality of scenarios, for example, machine to machine (machine to machine, M2M), macro-micro communication, enhanced mobile broadband (enhanced mobile broadband, eMBB), ultra reliable & low latency communication (ultra reliable & low latency communication, uRLLC), and massive machine type communication (massive machine type communication, mMTC). These scenarios may include but are not limited to a scenario of communication between terminals, a scenario of communication between network devices, a scenario of communication between a network device and a terminal, and the like. Descriptions are provided below by using an example in which the technical solutions of this application are applied to a scenario of communication between a network device and a terminal.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

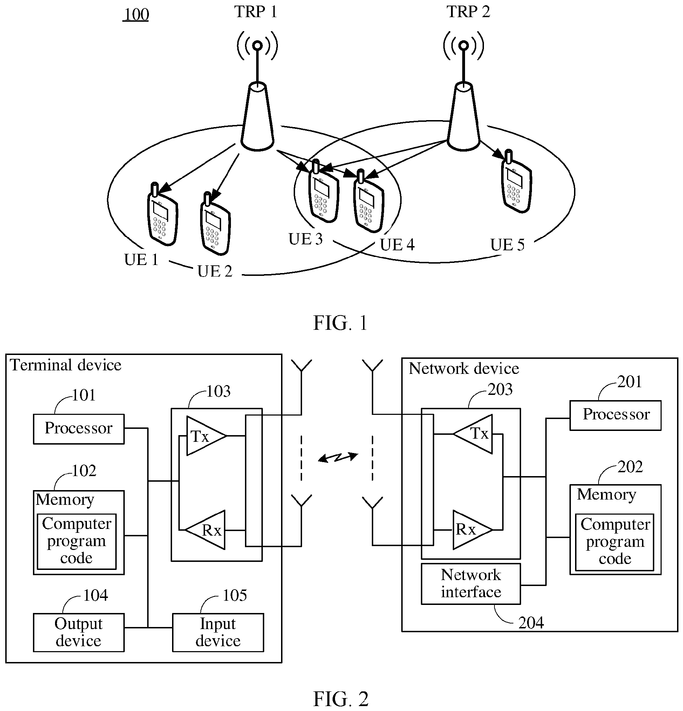

For ease of understanding of embodiments of this application, a communication system 100 applicable to a method provided in embodiments of this application is first described in detail with reference to FIG. 1. As shown in the figure, the communication system 100 includes at least two network devices, for example, a plurality of transmission reception points (transmission reception points, TRPs) shown in FIG. 1: TRP 1 and TRP 2. The communication system 100 may further include at least one terminal device, for example, a plurality of user equipments (user equipments, UEs) shown in FIG. 1: UE 1 to UE 5. The terminal devices UE 1 to UE 5 may be movable or fixed. One network device may communicate with one or more terminal devices through a radio link. Each network device may provide communication coverage for a specific geographical area, and may communicate with a terminal device located in the coverage area. For example, the network device may send configuration/scheduling information to the terminal device, and the terminal device may receive, based on the configuration information, downlink data sent by the network device. For another example, the terminal device may further send uplink data to the network device. In the system shown in FIG. 1, UE 1 and UE 2 are located in a coverage area of TRP 1, UE 3 and UE 4 are located in a co-coverage area of TRP 1 and TRP 2, and UE 5 is located in a coverage area of TRP 2. It can be learned that UE 3 and UE 4 may establish wireless communication with TRP 1 or may establish wireless communication with TRP 2. In this case, TRP 1 and TRP 2 may jointly provide communication services for UE 3 and UE 4 through CJT.

It should be understood that FIG. 1 shows an example of two network devices, a plurality of terminal devices, and communication links between communication devices. An actual system may include more network devices and terminal devices. This is not limited in this application.

A plurality of antennas may be disposed for the foregoing communication devices, for example, the network device (TRP 1 and TRP 2) and the terminal device (UE 1 to UE 5) in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

Optionally, the wireless communication system 100 may further include another network entity like a network controller or a mobility management entity. This is not limited in embodiments of this application.

It should be understood that FIG. 1 is merely a diagram, and does not constitute a limitation on an application scenario of the technical solutions provided in this application.

The network device may be a base station, a base station controller, or the like in wireless communication. For example, the base station may include various types of base stations, for example, a micro base station (which is also referred to as a small station), a macro base station, a relay station, or an access point. This is not specifically limited in this embodiment of this application. In this embodiment of this application, the base station may be a NodeB (NodeB) in WCDMA, an evolved NodeB (evolved NodeB, eNB or e-NodeB) in LTE, an eNB in the internet of things (internet of things, IoT) or narrowband internet of things (narrowband-internet of things, NB-IoT), or an access point (access point, AP) in a wireless fidelity (wireless fidelity, Wi-Fi) system, a wireless relay node, a wireless backhaul node, a transmission point (transmission point, TR), a TRP, or another base station in a 5G mobile communication network or a future evolved public land mobile network (public land mobile network, PLMN). This is not limited in embodiments of this application.

The network device described in this application, for example, a base station, usually includes a baseband unit (baseband unit, BBU), a remote radio unit (remote radio unit, RRU), or an active antenna unit (active antenna unit, AAU), an antenna, and a feeder configured to connect the RRU/AAU and the antenna. The BBU is configured to perform signal modulation. The RRU is configured to perform radio frequency processing. The antenna is configured to perform conversion between a guided wave on a cable and a space wave in air. A distributed base station greatly shortens a length of the feeder between the RRU/AAU and the antenna. This can reduce a signal loss and reduce costs of the feeder. In addition, the RRU/AAU and the antenna are small and can be installed anywhere, so that network planning is more flexible. In addition to placing the RRU/AAU in a remote location, all BBUs can be placed in a central office (Central Office, CO) in a concentrated manner. This concentrated manner can greatly reduce a quantity of base station rooms, reduce energy consumption of an auxiliary device, especially an air conditioner, and reduce carbon emissions by a large quantity. In addition, distributed BBUs can be centrally managed and scheduled after being centralized to form a BBU baseband pool, so that resource allocation is more flexible. In this mode, all physical base stations evolve into virtual base stations. All the virtual base stations share user information such as data receiving and reception and channel quality in the BBU baseband pool and cooperate with each other to implement joint scheduling.

In some deployments, the base station may include a central unit (central unit, CU) and a distributed unit (distributed unit, DU). The base station may further include an active antenna unit (active antenna unit, AAU). The CU implements some functions of the base station, and the DU implements some functions of the base station. For example, the CU is responsible for processing a non-real-time protocol and service, to implement functions of a radio resource control layer and a packet data convergence protocol (packet data convergence protocol, PDCP) layer. The DU is responsible for processing a physical layer protocol and a real-time service, to implement functions of a radio link control (radio link control, RLC) layer, a media access control layer, and a physical (physical, PHY) layer. The AAU implements some physical layer processing functions, radio frequency processing, and a related function of an active antenna. Information at an RRC layer eventually becomes information at the PHY layer, or is converted from information at the PHY layer. Therefore, in this architecture, high layer signaling, for example, RRC layer signaling or PDCP layer signaling, may also be considered as being sent by the DU or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN). This is not limited herein.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of a small coverage area and low transmit power, and are applicable to providing a high-speed data transmission service.

A terminal device in embodiments of this application may be referred to as a UE, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some terminals may be, for example, a mobile phone (mobile phone), a tablet computer (pad), a computer with a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved PLMN, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry for monitoring physical signs.

In addition, the terminal device may alternatively be a terminal device in an IoT system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

In addition, the terminal device may alternatively include an intelligent printer, a train detector, a gas station, and another sensor, and main functions of the terminal device include collecting data (which is a function of some terminal devices), receiving control information and downlink data of a network device, sending an electromagnetic wave, and transmitting uplink data to the network device.

The terminal is configured to provide a voice and/or data connectivity service for a user. The terminal may have different names, for example, user equipment (user equipment, UE), an access terminal, a terminal unit, a terminal station, a mobile station, a remote station, a remote terminal, a mobile device, a wireless communication device, a terminal agent, or a terminal apparatus. Optionally, the terminal 20 may be a handheld device, a vehicle-mounted device, a wearable device, or a computer that has a communication function. This is not limited in embodiments of this application. For example, the handheld device may be a smartphone. The vehicle-mounted device may be an in-vehicle navigation system. The wearable device may be a smart band or a VR device. The computer may be a PDA computer, a tablet computer, and a laptop computer (laptop computer).

FIG. 2 is a diagram of hardware structures of a network device and a terminal device according to an embodiment of this application.

The terminal device includes at least one processor 101 and at least one transceiver 103. Optionally, the terminal device may further include an output device 104, an input device 105, and at least one memory 102.

The processor 101, the memory 102, and the transceiver 103 are connected through a bus. The processor 101 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 101 may further include a plurality of CPUs, and the processor 101 may be a single-core (single-CPU) processor or a multi-core (multi-CPU) processor. The processor herein may be one or more devices, circuits, or processing cores configured to process data (for example, computer program instructions).

The memory 102 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a disk storage medium, another magnetic storage device, or any other medium that can be used to carry or store expected program code in a form of an instruction or a data structure and that can be accessed by a computer. This is not limited in embodiments of this application. The memory 102 may exist independently, and is connected to the processor 101 through the bus. Alternatively, the memory 102 may be integrated with the processor 101. The memory 102 is configured to store application program code for executing the solutions in this application, and the processor 101 controls the execution. The processor 101 is configured to execute the computer program code stored in the memory 102, to implement the method provided in embodiments of this application.

The transceiver 103 may use any apparatus like a transceiver, and is configured to communicate with another device or a communication network like an Ethernet, a radio access network (radio access network, RAN), a wireless local area network (wireless local area network, WLAN), or the like. The transceiver 103 includes a transmitter Tx and a receiver Rx.

The output device 104 communicates with the processor 101, and may display information in a plurality of manners. For example, the output device 104 may be a liquid crystal display (liquid crystal display, LCD), a light emitting diode (light emitting diode, LED) display device, a cathode ray tube (cathode ray tube, CRT) display device, a projector (projector), or the like. The input device 105 communicates with the processor 101, and may receive an input of a user in a plurality of manners. For example, the input device 105 may be a mouse, a keyboard, a touchscreen device, or a sensor device.

The network device includes at least one processor 201, at least one memory 202, at least one transceiver 203, and at least one network interface 204. The processor 201, the memory 202, the transceiver 203, and the network interface 204 are connected through a bus. The network interface 204 is configured to be connected to a core network device through a link (for example, an S1 interface), or connected to a network interface of another network device through a wired or wireless link (for example, an X2 interface) (not shown in the figure). This is not specifically limited in embodiments of this application. In addition, for related descriptions of the processor 201, the memory 202, and the transceiver 203, refer to the descriptions of the processor 101, the memory 102, and the transceiver 103 in the terminal. Details are not described herein again.

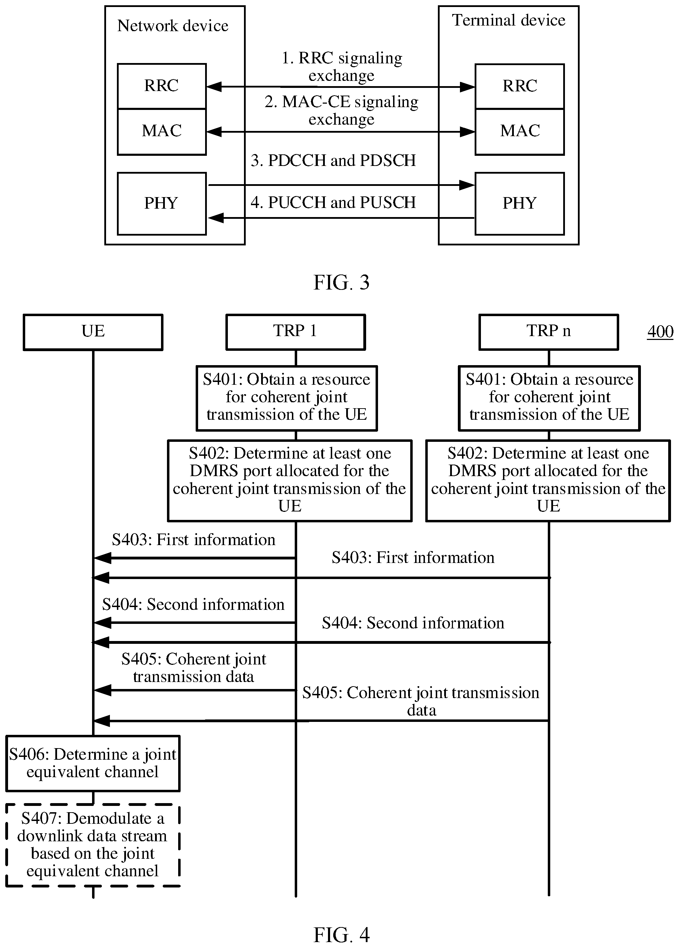

For example, a structure of a stack of some control plane and data plane protocols of communication apparatuses (including a network device and a terminal device) in this application is shown in FIG. 3. Both the network device and the terminal device have the following modules:

A radio resource control (radio resource control, RRC) signaling exchange module is a module used by the network device and the terminal device to send and receive RRC signaling. For example, the network device sends the RRC signaling to the terminal device, and the terminal device receives the RRC signaling from the network device.

A media access control (media access control, MAC) signaling exchange module is a module used by the network device and the terminal device to send and receive media access control (media access control, MAC)-control element (control element, CE) signaling. For example, the network device sends the MAC-CE signaling to the terminal device, and the terminal device receives the MAC-CE signaling from the network device.

A physical layer (physical layer, PHY) signaling and data exchange module is a module used by the network device and the terminal device to send and receive uplink/downlink control signaling and uplink/downlink data. For example, the network device sends a physical downlink control channel (physical downlink control channel, PDCCH), for example, downlink control information (downlink control information, DCI) in the PDCCH, to the terminal device, and the network device sends a physical downlink shared channel (physical downlink shared channel, PDSCH), for example, downlink data in the PDSCH, to the terminal device. The terminal device sends a physical uplink control channel (physical uplink control channel, PUCCH), for example, uplink control information (uplink control information, UCI) in the PUCCH, to the network device, and the terminal device sends a physical uplink shared channel (physical uplink shared channel, PUSCH), for example, uplink data in the PUSCH, to the network device.

It should be understood that the modules shown in FIG. 3 are merely examples. The network device and the terminal device may further include another communication module, for example, a radio link control (radio link control, RLC) module, a packet data convergence protocol (packet data convergence protocol, PDCP) module, or a service data adaptation protocol (service data adaptation protocol, SDAP) module. This is not specifically limited in embodiments of this application.

For ease of understanding the technical solutions of this application, the following briefly describes some terms used in embodiments of this application.
(1) Coherent joint transmission: A plurality of network devices jointly send same data to a terminal device by using a same resource (for example, a time domain resource, a frequency domain resource, or a time frequency domain resource), so that signals sent by the plurality of network devices are coherently superimposed on the terminal device, thereby improving a signal to interference plus noise ratio or a signal-to-noise ratio of a signal received by the terminal device, and improving data transmission efficiency.
(2) A reference signal is used for channel measurement, channel estimation, or the like. The reference signal may include, for example, a demodulation reference signal (demodulation reference signal, DMRS), a channel state information reference signal (channel state information reference signal, CSI-RS), and a synchronization signal block (synchronization signal block, SSB). The terminal device performs channel measurement or channel estimation by using the reference signal sent by the network device, to learn of a channel characteristic of a radio channel between the terminal device and the network device.
(3) A port of a reference signal indicates a logical port of the reference signal. The port of the reference signal is determined by a frequency domain resource, a time domain resource, and multiplexing code that are occupied by the reference signal. Reference signals belonging to a same port may be considered as passing through a same channel, and reference signals belonging to different ports are orthogonal to each other.
(4) A code division multiplexing (code division multiplexing, CDM) group is for distinguishing between reference signals that occupy a same time-frequency resource. When a plurality of reference signals occupy a same time-frequency resource, different orthogonal code is loaded to distinguish between different reference signals. For a plurality of reference signals that belong to different CDM groups, ports of the plurality of reference signals are different from each other. For a plurality of reference signals that belong to a same CDM group, ports of the plurality of reference signals may be the same or different.

The foregoing briefly describes the technical terms in embodiments of this application. Details are not described below again.

In a current conventional technology, coherent joint transmission is a data transmission manner that effectively improves quality of service (quality of service, QoS) of a user in a multi-cell co-coverage area in mobile communication and improves user experience. To implement the coherent joint transmission, a plurality of network devices need to perform coordinated transmission. Therefore, the plurality of network devices need to exchange information in real time, for example, information about resource allocation for transmission of data and a corresponding reference signal. For a CRAN networking manner, it may be considered that there is low-latency ideal backhaul transmission between network devices, and coordinated transmission between the network devices is easily implemented. For a distributed networking manner like an IPRAN, a non-ideal backhaul transmission latency between network devices may be 20 ms or even longer, and real-time information exchange between the network devices cannot be implemented. Currently, there is no good solution in the industry to implement coherent joint transmission between network devices in a non-ideal backhaul network.

A key technology in coherent joint transmission is to estimate a joint equivalent channel, that is, the terminal device needs to perform joint estimation on channels of a plurality of network devices participating in the coherent joint transmission, to demodulate data streams from the plurality of network devices. In coherent joint transmission of CRAN networking, usually, a plurality of network devices allocate a same reference signal port for each data stream in the coherent joint transmission, that is, each network device sends a same reference signal to one downlink data stream. In this way, the terminal device does not distinguish between reference signals from different network devices, considers channels of the plurality of network devices as a whole to perform joint channel estimation, and demodulates data streams from the plurality of network devices by using an estimated channel characteristic. However, in distributed networking, in the conventional technology, there is no coordination between different network devices, and the terminal device separately estimates a channel of each network device, so that coherent joint transmission cannot be implemented. How the terminal device learns which reference signals from different network devices are for estimating a joint equivalent channel is an important technical problem that needs to be resolved to implement application of the coherent joint transmission in the non-ideal backhaul network. Therefore, an embodiment of this application provides a reference signal indication method, to enable the coherent joint transmission in the non-ideal backhaul network, effectively improve QoS of a user in a multi-cell co-coverage area in a mobile network, and improve user experience.

This specification specifically provides the following several embodiments. The following describes the technical solutions of this application in detail with reference to FIG. 4 by using specific method embodiments. The following several specific embodiments may be combined with each other, and a same or similar concept or process may not be described repeatedly in some embodiments. It should be noted that FIG. 4 is a schematic flowchart of a method embodiment of this application, and shows detailed communication steps or operations of the method. However, these steps or operations are merely examples. Variants of various operations in FIG. 4 or other operations may be further performed in embodiments of this application. In addition, the steps in FIG. 4 may be performed based on an order different from that presented in FIG. 4, and not all operations in FIG. 4 may need to be performed.

FIG. 4 is a schematic flowchart of a reference signal indication method according to an embodiment of this application. The method 400 is applied to interaction between a plurality of (at least two) network devices and one terminal device. In this embodiment, an example in which the network device is a TRP, the terminal device is a UE, and a reference signal is a DMRS is used for description. It should be noted that the network device may be another network side device, the terminal device may be another device, and the reference signal may be another type of signal (for example, a CSI-RS signal or an SSB signal). This is not specifically limited in this application. A procedure shown in FIG. 4 includes the following steps.

S401: TRP 1 determines a resource for coherent joint transmission of the UE.

TRP 1 is any TRP in a TRP set that provides coherent joint transmission for the UE, and the coherent joint transmission of the UE includes transmission of one or more downlink data streams.

Similarly, TRP n determines a resource for the coherent joint transmission of the UE. n is an integer greater than 1 and less than or equal to N, N is a quantity of TRPs in the TRP set that provides the coherent joint transmission for the UE, and N is an integer greater than or equal to 2. It should be noted that in FIG. 4, only TRP 1 and TRP n are used as an example for description. During actual application, all TRPs in the TRP set separately perform this step.

It should be noted that the resource for the coherent joint transmission of the UE determined by TRP 1 is associated with the resource (for example, a time frequency resource, a frequency domain resource, a code domain resource, or a time frequency domain resource) for the coherent joint transmission of the UE determined by TRP n. The resource for the coherent joint transmission of the UE includes a resource occupied by one or more downlink data streams and a resource occupied by a corresponding DMRS. The TRPs in the TRP set allocate a same resource for each downlink data stream in the coherent joint transmission of the UE. For example, assuming that the TRP set includes TRP 1 and TRP 2, and the coherent joint transmission of the UE includes data stream 1, data stream 2, and data stream 3, both TRP 1 and TRP 2 perform transmission of data stream 1, data stream 2, and data stream 3 of the UE, and resources allocated by TRP 1 for the three downlink data streams are the same as resources allocated by TRP 2 for the three downlink data streams.

In a non-ideal backhaul case, it is difficult for TRP 1 and TRP 2 to coordinate respective resource allocation. For example, TRP 1 initially allocates resource 1 and resource 2 for data stream 1, and TRP 2 initially allocates resource 2 and resource 3 for data stream 1. To ensure that TRP 1 and TRP 2 allocate a same resource for each downlink data stream of the UE, in a possible implementation, TRP 1 indicates an initial resource allocation status of TRP 1 to the UE, TRP 2 indicates an initial resource allocation status of TRP 2 to the UE, and the UE updates a resource allocation status and reports the resource allocation status to TRP 1 and TRP 2, so that TRP 1 and TRP 2 allocate the same resource for the downlink data stream of the UE. For example, in the foregoing example, the UE may report resource 1, resource 2, and resource 3 to each of TRP 1 and TRP 2, so that both TRP 1 and TRP 2 transmit data stream 1 to the UE by using resource 1, resource 2, and resource 3, or transmit data stream 1 to the UE by using some common resources in resource 1, resource 2, and resource 3. In another possible implementation, TRP 1 indicates an initial resource allocation status of TRP 1 to the UE, TRP 2 indicates an initial resource allocation status of TRP 2 to the UE, and the UE reports a resource allocation status to a control node of TRP 1, a control node of TRP 2, or control nodes of TRP 1 and TRP 2, so that resources of downlink data streams allocated by TRP 1 and TRP 2 for the UE are the same. Similarly, TRP 1 and TRP 2 also use a same resource to transmit data stream 2 to the UE, and use a same resource to transmit data stream 3 to the UE. It should be understood that the foregoing is merely an example, and how the TRPs in the TRP set determine the resource for the coherent joint transmission of the UE is not specifically limited in this application.

S402: TRP 1 determines one or more DMRS ports allocated for the coherent joint transmission of the UE.

Similarly, TRP n determines one or more DMRS ports allocated for the coherent joint transmission of the UE.

In this step, TRP 1 determines corresponding DMRS ports for downlink data streams in one or more downlink data streams in the coherent joint transmission of the UE. One DMRS port is in one-to-one correspondence with one downlink data stream. For example, the coherent joint transmission of the UE includes data stream 1, data stream 2, and data stream 3. In this case, TRP 1 determines corresponding DMRS ports for the data streams. For example, data stream 1 corresponds to DMRS port 1, data stream 2 corresponds to DMRS port 2, and data stream 3 corresponds to DMRS port 3. It should be noted that a first DMRS corresponding to DMRS port 1, a second DMRS corresponding to DMRS port 2, and a third DMRS corresponding to DMRS port 3 occupy a same time-frequency resource or different time-frequency resources. Two DMRSs occupying a same time frequency resource include different orthogonal code sequences. In other words, different downlink data streams correspond to different DMRSs and different DMRS ports.

It should be noted that in FIG. 4, only TRP 1 and TRP n are used as an example for description. During actual application, all TRPs in the TRP set separately perform this step. Because the TRPs allocate DMRS ports by themselves without coordination, depending on statuses of the DMRS ports of the TRPs, different TRPs may allocate a same DMRS port or different DMRS ports for a same downlink data stream in the coherent joint transmission of the UE.

In a possible implementation, DMRS ports of different TRPs in the TRP set belong to different CDM groups. In other words, all DMRS ports of TRP i belong to CDM group i, and all DMRS ports of TRP j belong to CDM group j, where i is not equal to j. In this case, because a DMRS of each TRP belongs to a different CDM group, one or more DMRS ports allocated by each TRP for the coherent joint transmission of the UE are different.

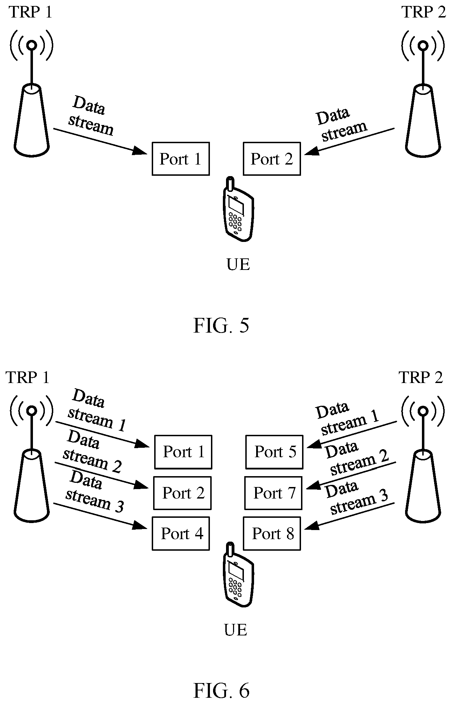

When the coherent joint transmission of the UE includes one downlink data stream, the TRPs in the TRP set allocate different DMRS ports for the downlink data stream. FIG. 5 is a diagram in which two TRPs respectively allocate DMRS ports for the downlink data stream of the UE. In FIG. 5, TRP 1 allocates DMRS port 1 for the downlink data stream, and TRP 2 allocates DMRS port 2 for the downlink data stream. DMRS port 1 and DMRS port 2 belong to different CDM groups.

When the coherent joint transmission of the UE includes a plurality of downlink data streams, the TRPs in the TRP set allocate different DMRS ports for different downlink data streams, and there is no same DMRS port in DMRS ports allocated by different TRPs. FIG. 6 is a diagram in which two TRPs separately allocate DMRS ports for three downlink data streams of the UE. In FIG. 6, TRP 1 allocates DMRS port 1 for data stream 1, allocates DMRS port 2 for data stream 2, and allocates DMRS port 4 for data stream 3. TRP 2 allocates DMRS port 5 for data stream 1, allocates DMRS port 7 for data stream 2, and allocates DMRS port 8 for data stream 3. DMRS port 1, DMRS port 2, and DMRS port 3 belong to one CDM group, and DMRS port 5, DMRS port 7, and DMRS port 8 belong to another CDM group.

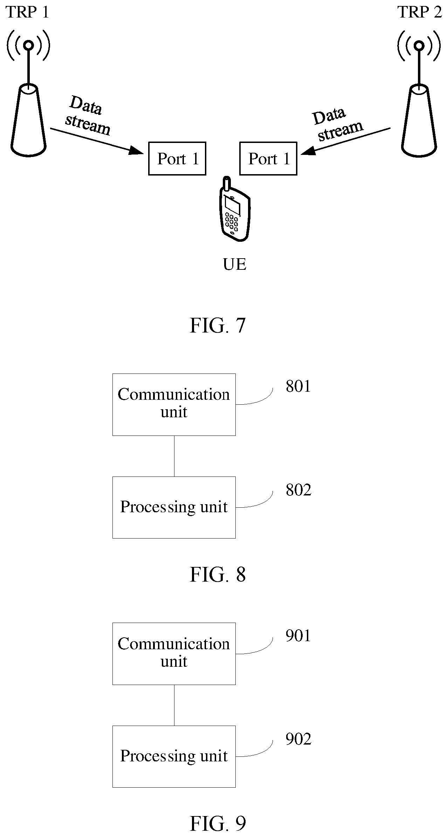

In another possible implementation, when the coherent joint transmission of the UE includes only one downlink data stream, DMRS ports of different TRPs in the TRP set may belong to a same CDM group. In other words, all the DMRS ports of TRP i belong to CDM group i, and all the DMRS ports of TRP j belong to CDM group j, where i is equal to j. In this case, because a DMRS of each TRP belongs to a same CDM group, a DMRS port allocated by each TRP for the downlink data stream may be the same or different. Optionally, the DMRS port allocated by each TRP for the downlink data stream is different. This is similar to that shown in FIG. 5, and a difference lies in that DMRS port 1 and DMRS port 2 belong to a same CDM group. Optionally, each TRP allocates a same DMRS port for the downlink data stream. FIG. 7 is a diagram in which two TRPs separately allocate a same DMRS port for the downlink data stream of the UE. In FIG. 7, both a DMRS port allocated by TRP 1 for the downlink data stream and a DMRS port allocated by TRP 2 for the downlink data stream are DMRS port 1.

S403: TRP 1 sends first information to the UE, where the first information indicates that the one or more DMRSs of TRP 1 are for estimating a joint equivalent channel. Correspondingly, the UE receives the first information from TRP 1.

Similarly, TRP n sends first information to the UE. Correspondingly, the UE receives the first information from TRP n.

TRP 1 determines, in S402, the one or more DMRS ports corresponding to the one or more downlink data streams of the UE. In this step, TRP 1 notifies the UE that the one or more DMRS ports are for estimating the joint equivalent channel. For a downlink data stream in the coherent joint transmission of the UE, the UE receives, from a plurality of TRPs, the downlink data stream and a DMRS corresponding to the downlink data stream. The UE estimates the joint equivalent channel based on the DMRS received from the plurality of TRPs, and demodulates the received downlink data stream based on an estimated equivalent channel characteristic. Therefore, the TRPs in the TRP set that provides the coherent joint transmission for the UE need to notify the UE that the DMRS is for estimating the joint equivalent channel. It should be noted that in FIG. 4, only TRP 1 and TRP n are used as an example for description. During actual application, all TRPs in the TRP set separately perform this step.

Optionally, the first information is carried in RRC signaling. In addition, the first information may be alternatively carried in MAC-CE signaling or DCI signaling.

Optionally, the first information is carried in existing RRC signaling, MAC-CE signaling, or DCI signaling in a standard, for example, included in a field (field) of the existing signaling, or may be carried in new RRC signaling, MAC-CE signaling, or DCI signaling.

S404: TRP 1 sends second information to the UE, where the second information indicates the one or more DMRS ports of TRP 1. Correspondingly, the UE receives the second information from TRP 1.

Similarly, TRP n sends second information to the UE. Correspondingly, the UE receives the second information from TRP n.

TRP 1 determines, in S402, the one or more DMRS ports corresponding to the one or more data streams in the coherent joint transmission of the UE, and notifies, in S403, the UE that the one or more DMRS ports are used by the UE to estimate the joint equivalent channel. In this step, TRP 1 sends indication information of the one or more determined DMRS ports to the UE by using the second information, so that the UE obtains indication information of a DMRS port corresponding to each downlink data stream. It should be noted that in FIG. 4, only TRP 1 and TRP n are used as an example for description. During actual application, all TRPs in the TRP set separately perform this step.

Optionally, the second information includes port numbers, port indexes, or other port indication information of all of the one or more DMRS ports.

Optionally, the second information is carried in physical layer control signaling such as the DCI signaling. In addition, the second information may alternatively be carried in the MAC-CE signaling or the RRC signaling.

Optionally, the second information is carried in existing RRC signaling, MAC-CE signaling, or DCI signaling in a standard, for example, included in a field (field) of the existing signaling, or may be carried in new RRC signaling, MAC-CE signaling, or DCI signaling.

For example, in FIG. 5, TRP 1 may send DCI 1 to the UE, where second information in DCI 1 includes indication information of DMRS port 1. TRP 2 may send DCI 2 to the UE, where second information in DCI 2 includes indication information of DMRS port 2. Optionally, indication information of a DMRS port includes a port number or a port index of the DMRS port.

For example, in FIG. 6, TRP 1 may send DCI 1 to the UE, where second information in DCI 1 includes the indication information of DMRS port 1, the indication information of DMRS port 2, and indication information of DMRS port 4. TRP 2 may send DCI 2 to the UE, where second information in DCI 2 includes indication information of DMRS port 5, indication information of DMRS port 7, and indication information of DMRS port 8.

Optionally, TRP 1 includes, according to a first rule, the indication information of the plurality of DMRS ports of TRP 1 in the second information in a specific order. Similarly, TRP n also includes, according to the first rule, indication information of the plurality of DMRS ports of TRP n in the second information in an order. Therefore, the UE may learn, from an order of indication information of DMRS ports received by the TRPs, which DMRS ports are for performing joint equivalent channel estimation on a downlink data stream. For example, the first rule is that port numbers or port indexes of the plurality of DMRS ports are, in ascending or descending order, in one-to-one correspondence with sequence numbers of transport layers corresponding to a plurality of data streams. It should be understood that, in transmission of the plurality of data streams, each data stream is mapped to one transport layer, and the plurality of data streams are respectively mapped to a plurality of transport layers. For example, in the example in FIG. 6, data stream 1 corresponds to transport layer 1 in both TRP 1 and TRP 2, data stream 2 corresponds to transport layer 2 in both TRP 1 and TRP 2, and data stream 3 corresponds to transport layer 3 in both TRP 1 and TRP 2. In this case, TRP 1 sends the second information in an order of the indication information of DMRS port 1, the indication information of DMRS port 2, and the indication information of DMRS port 3. TRP 2 sends second information in an order of the indication information of DMRS port 5, the indication information of DMRS port 7, and the indication information of DMRS port 8. The UE may determine, based on an order of the indication information of the DMRS ports respectively sent by TRP 1 and TRP 2, that DMRS port 1 and DMRS port 5 are for estimating a joint equivalent channel of a downlink data stream at transport layer 1, DMRS port 2 and DMRS port 7 are for estimating a joint equivalent channel of a downlink data stream at transport layer 2, and DMRS port 4 and DMRS port 8 are for estimating a joint equivalent channel of a downlink data stream at transport layer 3. The first rule may be preconfigured, or may be predefined in a protocol.

For example, in FIG. 7, TRP 1 may send DCI 1 to the UE, where first information in DCI 1 includes the indication information of DMRS port 1. TRP 2 may send DCI 2 to the UE, where first information in DCI 2 also includes the indication information of DMRS port 1.

S405: TRP 1 sends coherent joint transmission data to the UE. Correspondingly, the UE receives the coherent joint transmission data from TRP 1.

Similarly, TRP n sends coherent joint transmission data to the UE. Correspondingly, the UE receives the coherent joint transmission data from TRP n.

The coherent joint transmission data includes the one or more downlink data streams and one or more DMRSs corresponding to the one or more downlink data streams. It should be noted that transmission of a downlink data stream and a DMRS corresponding to the downlink data stream is performed in a same slot (slot) (or subframe (subframe)). For example, transmission of one downlink data stream may be performed in a plurality of slots (or subframes), and transmission of a DMRS corresponding to the downlink data stream is also performed in the plurality of slots (or subframes) together with data of the downlink data stream. In a slot (or subframe), the UE estimates a channel by detecting a DMRS in the slot (or subframe), and demodulates a downlink data stream in the slot (or subframe) based on a characteristic of the channel. When coherent joint transmission includes a plurality of downlink data streams, the plurality of downlink data streams reuse a same slot (or subframe). It should be noted that in FIG. 4, only TRP 1 and TRP n are used as an example for description. During actual application, all TRPs in the TRP set separately perform this step.

S406: The UE determines a joint equivalent channel.

In S404, the UE obtains, by using the second information separately sent by the plurality of TRPs, indication information of the one or more DMRS ports allocated by the TRPs for the UE for coherent joint transmission and the DMRS for estimating a joint equivalent channel. In S405, the UE receives the coherent joint transmission data respectively sent by the plurality of TRPs, where the coherent joint transmission data includes the one or more downlink data streams and the corresponding DMRS. In this step, the UE estimates a channel of the one or more downlink data streams based on the indication information of the one or more DMRS ports, to obtain a joint equivalent channel of each data stream.

For example, in the DMRS port allocation manner shown in FIG. 5, TRP 1 precodes, by using a precoding matrix **P₁**, a DMRS sent on DMRS port 1, and sends a precoded DMRS. TRP 2 precodes, by using a precoding matrix **P₂**, a DMRS signal sent on DMRS port 2, and sends a precoded DMRS. That one TRP precodes and sends one DMRS may be understood as that the TRP sends a DMRS coded by using a precoding matrix to the terminal device in a specific spatial direction. In the foregoing steps, the UE learns that DMRS port 1 and DMRS port 2 are for estimating the joint equivalent channel. In this step, the UE determines the joint equivalent channel of the data stream by detecting DMRSs sent on DMRS port 1 and DMRS port 2. For example, assuming that a channel between TRP 1 and the UE is represented as **H₁**, and a channel between TRP 2 and the UE is represented as **H₂**, a joint equivalent channel determined by the UE by using a DMRS is [**H₁ H₂**][**P₁ P₂**]*^{T}*, where **A***^{T}* represents transpose of a matrix **A.**

For example, in the DMRS port allocation manner shown in FIG. 6, TRP 1 precodes, by using a precoding matrix **P**_{1,1}, a DMRS sent on DMRS port 1, precodes, by using a precoding matrix **P**_{1,2}, a DMRS sent on DMRS port 2, precodes, by using a precoding matrix **P**_{1,3}, a DMRS sent on DMRS port 4, and sends three precoded DMRSs. TRP 2 precodes, by using a precoding matrix **P**_{2,1}, a DMRS sent on DMRS port 5, precodes, by using a precoding matrix **P**_{2,2}, a DMRS sent on DMRS port 7, precodes, by using a precoding matrix **P**_{2,3}, a DMRS sent on DMRS port 8, and sends three precoded DMRSs. In the foregoing step, the UE learns that DMRS port 1 and DMRS port 5 are for estimating a joint equivalent channel of data stream 1, DMRS port 2 and DMRS port 7 are for estimating a joint equivalent channel of data stream 2, and DMRS port 4 and DMRS port 8 are for estimating a joint equivalent channel of data stream 3. In this step, the UE separately determines respective joint equivalent channels for different downlink data streams. For example, the UE determines, by detecting DMRSs sent on DMRS port 1 and DMRS port 5, that the joint equivalent channel corresponding to downlink data stream 1 is [**H₁ H**₂][**P**_{1,1} **P**_{2,1}]*^{T}*. Similarly, the UE determines, by detecting DMRSs sent on DMRS port 2 and DMRS port 7, that the joint equivalent channel corresponding to downlink data stream 2 is [**H₁ H**₂][**P**_{1,2} **P**_{2,2}]*^{T}*. The UE determines, by detecting DMRSs sent on DMRS port 4 and DMRS port 8, that the joint equivalent channel corresponding to downlink data stream 3 is [**H₁ H**₂] [**P**_{1,3} **P**_{2,3}]*^{T}*.

Optionally, the terminal device may determine, according to the first rule, which DMRS ports from different TRPs are for performing joint equivalent channel estimation on a downlink data stream.

For example, in the DMRS port allocation manner shown in FIG. 7, TRP 1 precodes, by using a precoding matrix **P**₁, a DMRS sent on DMRS port 1, and sends a precoded DMRS. TRP 2 precodes, by using a precoding matrix **P**₂, a DMRS signal sent on DMRS port 1, and sends a precoded DMRS. The UE determines the joint equivalent channel by detecting the DMRS sent on DMRS port 1. For example, a channel between TRP 1 and the UE is represented as **H**₁, and a channel between TRP 2 and the UE is represented as **H**₂. In this case, the joint equivalent channel determined by the UE by using the DMRS is [**H₁ H**₂][**P**₁ **P**₂]*^{T}*. It should be noted that, in the example in FIG. 5, because the TRPs use different DMRS ports, the UE can separately estimate equivalent channels of the TRPs, and further combine the equivalent channels to obtain a joint equivalent channel. In the example in FIG. 7, because the TRPs use a same DMRS port, the UE cannot distinguish between channels of different TRPs, and the UE directly obtains a joint equivalent channel by performing measurement on a DMRS port.

Optionally, the method further includes S407.

S407: The UE demodulates the downlink data stream based on the joint equivalent channel.

In S405, the UE determines a joint equivalent channel corresponding to each of the one or more downlink data streams. In this step, the UE demodulates each downlink data stream based on a channel parameter of each joint equivalent channel, to obtain data of each downlink data stream. Specifically, for how the UE demodulates a data stream based on a joint equivalent channel of the downlink data stream, refer to various existing methods in the industry. Details are not described again in this application.

In the solutions of embodiments of this application, the plurality of network devices that provide coherent joint transmission for the terminal device separately indicate the information about the reference signal for estimating the joint equivalent channel, so that the terminal device estimates the joint equivalent channels of the plurality of network devices based on corresponding indicated information, thereby enabling coherent joint transmission in a non-ideal backhaul network, effectively improving QoS of a user in a multi-cell co-coverage area in a mobile network, and improving user experience.

The foregoing mainly describes the solutions provided in embodiments of this application from a perspective of interaction between network elements. It may be understood that, to implement the foregoing functions, each of the network elements such as the network device and the terminal includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or by computer software driving hardware depends on particular applications and design constraints of the technical solutions. A person skilled in the art may use different methods to implement the described functions for each particular application, but it should not be considered that the implementation goes beyond the scope of this application.

In embodiments of this application, the network device and the terminal may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which the functional modules are obtained through division based on each corresponding function is used for description below.

FIG. 8 is a diagram of a structure of a network device according to an embodiment of this application. As shown in FIG. 8, the network device includes a communication unit 801 and a processing unit 802. The communication unit 801 is configured to support the network device in performing S403 and S405 in FIG. 4, and/or is configured to support another process of the technical solutions described in this specification. The processing unit 802 is configured to support the network device in performing steps S401 and S402 in FIG. 4, and/or is configured to support another process of the technical solutions described in this specification.

In an example, with reference to the network device shown in FIG. 2, the communication unit 801 in FIG. 8 may be implemented by the transceiver 203 in FIG. 2, and the processing unit 702 in FIG. 8 may be implemented by the processor 201 in FIG. 2. This is not specifically limited in this embodiment of this application.

FIG. 9 is a diagram of a structure of a terminal device according to an embodiment of this application. As shown in FIG. 9, the terminal device includes a communication unit 901 and a processing unit 902. The communication unit 901 is configured to support the terminal device in performing steps S403 and S405 in FIG. 4, and/or is configured to support another process of the technical solutions described in this specification. The processing unit 902 is configured to support the terminal device in performing steps S404 and S406 in FIG. 4, and/or is configured to support another process of the technical solutions described in this specification.

In an example, with reference to the terminal device shown in FIG. 2, the communication unit 901 in FIG. 9 may be implemented by the transceiver 103 in FIG. 2, and the processing unit 902 in FIG. 9 may be implemented by the processor 101 in FIG. 2. This is not specifically limited in this embodiment of this application.

An embodiment of this application further provides a computer-readable storage medium. The computer-readable storage medium stores computer instructions. When the computer-readable storage medium runs on a communication apparatus, the communication apparatus is enabled to perform the methods shown in FIG. 3 and FIG. 6. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk drive, or a magnetic tape), an optical medium, a semiconductor medium (for example, a solid-state drive (solid-state drive, SSD)), or the like.

An embodiment of this application further provides a computer program product including computer instructions. When the computer program product runs on a communication apparatus, the communication apparatus is enabled to perform the methods shown in FIG. 4.

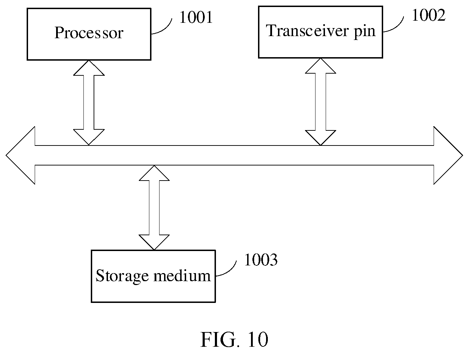

FIG. 10 is a diagram of a structure of a chip according to an embodiment of this application. The chip shown in FIG. 10 may be a general-purpose processor, or may be a dedicated processor. The chip includes a processor 1001. The processor 1001 is configured to support a communication apparatus in performing the technical solution shown in FIG. 4.

Optionally, the chip further includes a transceiver pin 1002. The transceiver pin 1002 is configured to receive control from the processor 1001, and is configured to support the communication apparatus in performing the technical solution shown in FIG. 4.

Optionally, the chip shown in FIG. 10 may further include a storage medium 1003.

It should be noted that the chip shown in FIG. 10 may be implemented by the following circuits or components: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform various functions described throughout this application.

The terminal, the network device, the computer storage medium, the computer program product, and the chip that are provided in embodiments of this application are all configured to perform the method provided above. Therefore, for beneficial effects that can be achieved, refer to beneficial effects corresponding to the method provided above. Details are not described herein again.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A reference signal indication method, wherein the method comprises:
receiving, by a terminal device, a plurality of pieces of first information from a plurality of network devices, wherein one piece of first information is from one network device, and the first information indicates that at least one reference signal of the network device is for estimating a joint equivalent channel;
receiving, by the terminal device, a plurality of pieces of second information from the plurality of network devices, wherein one piece of second information is from one network device, and the second information indicates a port of the at least one reference signal;
receiving, by the terminal device, a plurality of pieces of coherent joint transmission data from the plurality of network devices, wherein one piece of coherent joint transmission data is from one network device, the coherent joint transmission data comprises at least one data stream and the at least one reference signal corresponding to the at least one data stream, and one data stream corresponds to one reference signal; and
determining, by the terminal device, at least one joint equivalent channel based on the at least one reference signal of the plurality of network devices, wherein one joint equivalent channel is determined based on one reference signal of the plurality of network devices.

2. The method according to claim 1, wherein the method further comprises:
demodulating, by the terminal device, the at least one data stream based on the at least one joint equivalent channel, wherein one data stream is demodulated through one joint equivalent channel.

3. The method according to claim 1 or 2, wherein the reference signal is a demodulation reference signal DMRS.

4. The method according to any one of claims 1 to 3, wherein the second information comprises a port number or a port index of each of the at least one reference signal.

5. The method according to any one of claims 1 to 4, wherein the first information is carried in radio resource control RRC signaling.

6. The method according to any one of claims 1 to 5, wherein the second information is carried in downlink control information DCI signaling.

7. A reference signal indication method, wherein the method comprises:
determining, by a network device, a resource for coherent joint transmission of a terminal device;
determining, by the network device, a port of at least one reference signal allocated for the coherent j oint transmission;
sending, by the network device, first information to the terminal device, wherein the first information indicates that the at least one reference signal is for estimating a joint equivalent channel;
sending, by the network device, second information to the terminal device, wherein the second information indicates the port of the at least one reference signal; and
sending, by the network device, coherent joint transmission data to the terminal device, wherein the coherent joint transmission data comprises at least one data stream and the at least one reference signal corresponding to the at least one data stream, and one data stream corresponds to one reference signal.

8. The method according to claim 7, wherein the second information comprises a port number or a port index of each of the at least one reference signal.

9. The method according to claim 7 or 8, wherein before the sending, by the network device, second information to the terminal device, the method further comprises:
determining, by the network device according to a first rule, an arrangement order of port numbers or port indexes of all of the at least one reference signal comprised in the second information.

10. The method according to any one of claims 7 to 9, wherein the reference signal is a demodulation reference signal DMRS.

11. The method according to any one of claims 7 to 10, wherein the first information is carried in radio resource control RRC signaling.

12. The method according to any one of claims 7 to 11, wherein the second information is carried in downlink control information DCI signaling.

13. A communication apparatus, comprising:
a communication unit, configured to receive a plurality of pieces of first information from a plurality of network devices, wherein one piece of first information is from one network device, and the first information indicates that at least one reference signal of the network device is for estimating a joint equivalent channel, wherein
the communication unit is further configured to receive a plurality of pieces of second information from the plurality of network devices, wherein one piece of second information is from one network device, and the second information indicates a port of the at least one reference signal; and
the communication unit is further configured to receive coherent joint transmission data from the plurality of network devices, wherein one piece of coherent joint transmission data is from one network device, the coherent joint transmission data comprises at least one data stream and the at least one reference signal corresponding to the at least one data stream, and one data stream corresponds to one reference signal; and
a processing unit, configured to determine at least one joint equivalent channel based on the at least one reference signal of the plurality of network devices, wherein one joint equivalent channel is determined based on one reference signal of the plurality of network devices.

14. The communication apparatus according to claim 13, wherein
the processing unit is further configured to demodulate the at least one data stream based on the at least one joint equivalent channel, and one data stream is demodulated through one joint equivalent channel.

15. The communication apparatus according to claim 13 or 14, wherein the reference signal is a demodulation reference signal DMRS.

16. The communication apparatus according to any one of claims 13 to 15, wherein the second information comprises a port number or a port index of each of the at least one reference signal.

17. The communication apparatus according to any one of claims 13 to 16, wherein the first information is carried in radio resource control RRC signaling.

18. The communication apparatus according to any one of claims 13 to 17, wherein the second information is carried in downlink control information DCI signaling.

19. A communication apparatus, comprising:
a processing unit, configured to determine a resource for coherent joint transmission of a terminal device, wherein
the processing unit is further configured to determine a port of at least one reference signal allocated for the coherent joint transmission; and
a communication unit, configured to send first information to the terminal device, wherein the first information indicates that the at least one reference signal is for estimating a joint equivalent channel, wherein
the communication unit is further configured to send second information to the terminal device, wherein the second information indicates the port of the at least one reference signal; and
the communication unit is further configured to send coherent joint transmission data to the terminal device, wherein the coherent joint transmission data comprises at least one data stream and the at least one reference signal corresponding to the at least one data stream, and one data stream corresponds to one reference signal.

20. The communication apparatus according to claim 19, wherein the second information comprises a port number or a port index of each of the at least one reference signal.

21. The communication apparatus according to claim 19 or 20, wherein
the processing unit is further configured to determine, according to a first rule, an arrangement order of port numbers or port indexes of all of the at least one reference signal comprised in the second information.

22. The communication apparatus according to any one of claims 19 to 21, wherein the reference signal is a demodulation reference signal DMRS.

23. The communication apparatus according to any one of claims 19 to 22, wherein the first information is carried in radio resource control RRC signaling.

24. The communication apparatus according to any one of claims 19 to 23, wherein the second information is carried in downlink control information DCI signaling.

25. A communication apparatus, comprising at least one processor and an interface circuit, wherein
the interface circuit is configured to communicate with a module outside the communication apparatus; and
the at least one processor is configured to execute a computer program or instructions, to enable the communication apparatus to perform the method according to any one of claims 1 to 12.

26. A communication apparatus, comprising at least one processor and a memory, wherein
the memory is configured to store a computer program or instructions; and
the at least one processor is configured to execute the computer program or the instructions, to enable the method according to any one of claims 1 to 12 to be performed.

27. A chip system, wherein the chip system comprises a processing circuit, and the processing circuit is coupled to a storage medium; and
the processing circuit is configured to execute a part or all of computer programs or instructions in the storage medium, and when the part or all of the computer programs or the instructions are executed, the processing circuit is configured to implement the method according to any one of claims 1 to 12.

28. A computer-readable storage medium, wherein the computer-readable storage medium stores instructions, and when the instructions are executed by a computer, the method according to any one of claims 1 to 12 is performed.

29. A computer program product comprising a computer program or instructions, wherein when the computer program product runs on a computer, the method according to any one of claims 1 to 12 is performed.
